# EUROPÄISCHE PATENTANMELDUNG

(11) **EP 4 474 139 A2**
(43) Veröffentlichungstag der Anmeldung: **11.12.2024**
(21) Anmeldenummer: 24173325.2
(22) Anmeldetag: 30.04.2024
(51) Int. Cl.: B30B 9/28, D21J 3/10, D21J 7/00

(54) **VORRICHTUNG UND VERFAHREN ZUM FORMEN UND PRESSEN EINES FASERN UMFASSENDEN VERSCHLUSSES**

(30) Priorität: 06.06.2023 DE 102023114889
(71) Anmelder: Krones AG, 93073 Neutraubling (DE)
(72) Erfinder: Winzinger, Frank, 93073 Neutraubling (DE)
(74) Vertreter: Grünecker Patent- und Rechtsanwälte PartG mbB

(57) **Zusammenfassung**

Vorrichtung zum Formen und Pressen eines Fasern, insbesondere Pulpe, umfassenden Verschlusses, wobei die Vorrichtung umfasst: eine Form, in der der Verschluss zumindest teilweise auszubilden ist und welche eine Öffnung aufweist, einen Dorn, insbesondere zum Einbringen in die Öffnung, zumindest zeit- und/oder teilweise innerhalb der Form, wobei der Dorn eine Struktur zum Formen des Verschlusses umfasst, Bewegungsmittel zum Ausführen einer Relativbewegung, wie etwa einer radialen Relativbewegung in Bezug auf eine Längsachse des Dorns, zwischen der Form und dem Dorn zum Verkleinern eines Abstands von der Form und dem Dorn und somit zum Formen und Pressen des Verschlusses. Weiter betrifft die Erfindung ein Verfahren zum Formen und Pressen eines Fasern umfassenden Verschlusses unter Verwendung der Vorrichtung.

## Beschreibung

Die Erfindung betrifft eine Vorrichtung und ein Verfahren zum Formen und Pressen eines Fasern, insbesondere Pulpe, umfassenden Verschlusses gemäß den unabhängigen Ansprüchen. Die Erfindung betrifft weiter eine Abfüllanlage gemäß Anspruch 16.

### Stand der Technik

Bei der Herstellung von Verschlüssen aus Fasern, insbesondere aus Pulpe, bestehen hohe Anforderungen an Festigkeit und Stabilität. Bekannt ist beispielsweise, dass an den aus Pulpe geformten Verschluss nachträglich ein Plastikverschluss aufgesetzt wird.

### Aufgabe

Die Aufgabe der Erfindung ist es, eine Vorrichtung und ein Verfahren zur Verfügung zu stellen, die ein Ausbilden eines Fasern, insbesondere Pulpe, umfassenden formstabilen Verschlusses ermöglichen und in den Abfüllprozess integrieren.

### Lösung

Die Aufgabe wird gelöst durch die Vorrichtung und das Verfahren gemäß den unabhängigen Ansprüchen. Weitere Ausführungsformen sind in den Unteransprüchen offenbart.

Mit der Vorrichtung kann der Fasern umfassende Verschluss mit hoher Genauigkeit und Stabilität geformt werden. Zudem kann die Restfeuchte des Verschlusses durch das Formen, insbesondere durch die Relativbewegung des Bewegungsmittels, verringert werden, sodass eine nachfolgende Trocknung nicht mehr oder nur noch verkürzt notwendig ist. So kann die Qualität der Verschlüsse und die Effizienz der Vorrichtung verbessert werden. Weiter kann das Formen des Fasern umfassenden Verschluss und das Abfüllen in einer Anlage stattfinden.

Bei den Fasern handelt es sich insbesondere, zumindest teilweise, um pflanzliche Fasern. Pulpe kann eine Suspension aus Wasser und Fasern umfassen. Die Fasern können Lignin, Bananenblätter, Chinin, Glasfasern, Metallfäden und/oder Operationsfäden umfassen. Die Fasern können beispielsweise Fasern von Nadelhölzern, Blattgehölzen und/oder Platanen und/oder von Gräsern, Schilf und/oder Bambus oder dergleichen umfassen. Lignin kann eine stützende Wirkung auf den Zellstoff haben und kann auch für transparente Anwendungen geeignet sein. Bananenblätter können für größere Behälter, wie beispielsweise Ein-Weg-Geschirr, geeignet sein. Durch ein Einbetten von Glasfasern, Metallfäden und/oder Operationsfäden kann eine Verbesserung der Festigkeit erreicht werden.

Der Verschluss kann einen Innendurchmesser von 0,1 cm bis 10 cm, beispielsweise von 1,5 cm bis 6 cm, aufweisen. Bei Fässern kann der Verschluss einen Innendurchmesser von bis zu einem Meter aufweisen.

Der Dorn kann bereits bei der Bildung der Öffnung des Verschlusses in diesem angeordnet sein oder zur Bildung der Öffnung beitragen oder alternativ erst nach der Bildung der Öffnung in diese eingebracht werden.

Das Einbringen des Dorns kann insbesondere entlang seiner Längsachse erfolgen, sodass die Längsachse des Dorns der Bewegungsrichtung des Dorns beim Einbringen in die Öffnung entspricht.

Die Rohversion des Verschlusses kann beispielsweise kein Gewinde und/oder keine Einrastelemente umfassen. Ein Gewinde und/oder Einrastelemente können beispielsweise mittels der Struktur der Form geformt und gepresst, also beispielsweise ausgebildet, werden.

Das Ausführen der Relativbewegung kann bedeuten, dass die Form mittels der Bewegungsmittel bewegbar ausgebildet sein kann, wohingegen der Dorn ortsfest ausgebildet sein kann.

Alternativ kann das Ausführen der Relativbewegung bedeuten, dass der Dorn mittels der Bewegungsmittel bewegbar ausgebildet sein kann, wohingegen die Form ortsfest ausgebildet sein kann. Der Dorn kann beispielsweise mehrteilig ausgebildet sein, wobei eines oder mehrere der Teile bewegbar ausgebildet sein kann/können.

Alternativ kann vorgesehen sein, dass das Ausführen der Relativbewegung bedeuten kann, dass sowohl die Form als auch der Dorn mittels der Bewegungsmittel bewegbar ausgebildet sein können. Der Dorn kann beispielsweise mehrteilig ausgebildet sein, wobei einer oder mehrere der Teile bewegbar ausgebildet sein kann/können.

Zum Formen und Pressen des Verschlusses kann mittels der Bewegungsmittel der Abstand von der Form und dem Dorn verkleinert werden. Es kann vorgesehen sein, dass die Bewegungsmittel zum Ausführen einer Relativbewegung zwischen der Form und dem Dorn weiter zum Vergrößern eines Abstands von der Form und dem Dorn ausgebildet sein können. Beispielsweise können nach einer Fertigstellung des Verschlusses durch das Formen und Pressen die Form und der Dorn voneinander entfernt werden, sodass der dazwischen angeordnete Verschluss entnommen werden kann. Es kann vorgesehen sein, dass der Dorn nach Fertigstellung des Verschlusses aus einer Öffnung des Verschlusses ausbringbar sein kann.

Ein Druck beim Pressen kann in einem Bereich von 10000 N/m² (0,1 bar) bis 100000000 N/m² (1000 bar), beispielsweise von 100000 N/m² (1 bar) bis 10000000 N/m² (100 bar) oder beispielsweise von 500000 N/m² (5 bar) bis 5000000 N/m² (50 bar) liegen, sodass der geformte Verschluss besonders stabil und widerstandsfähig wird.

Die Form kann einteilig oder mehrteilig ausgebildet sein. Entsprechend kann die Struktur ein- oder mehrteilig ausgebildet sein.

Beispielsweise können zum Formen und Pressen eines Verschlusses mit rundem Querschnitt der Dorn und die Form im Wesentlichen kreiszylindrische Querschnitte umfassen.

Die Struktur kann eine Negativform eines auszubildenden Gewindes und/oder von auszubildenden Einrastelementen umfassen. So lässt sich der geformte Verschluss mit einem entsprechenden Behälter verbinden.

Die Relativbewegung kann eine Bewegung der Form in Richtung auf den Dorn zu oder von dem Dorn weg umfassen. Die Bewegung kann radial in Richtung auf den Dorn zu oder radial weg von dem Dorn vorgesehen sein. Radial kann hierbei bezüglich einer Längsachse des Dorns beziehungsweise der Bewegungsrichtung des Dorns beim Einbringen in die Öffnung bedeuten. So kann der Verschluss zunächst unter Druck geformt und anschließend aus der Form entnommen werden.

Die Relativbewegung kann eine Bewegung des Dorns in Richtung auf die Form zu oder von der Form weg umfassen. Damit kann der Verschluss ebenfalls zunächst unter Druck geformt und anschließend aus der Form entnommen werden.

Die Form kann eine strukturierte Mantelfläche in Form von Erhebungen und/oder Vertiefungen, insbesondere Rillen, umfassen. Beim Ausführen einer Relativbewegung mittels der Bewegungsmittel zwischen der Form und dem Dorn zum Verkleinern des Abstands von der Form und dem Dorn kann die Form, die die Struktur umfasst, den Verschluss kontaktieren und er kann gegen die strukturierte Mantelfläche drücken, sodass der Verschluss ausgeformt und gepresst werden kann, wobei der Verschluss durch die strukturierte Oberfläche leichter manuell geöffnet beziehungsweise von dem entsprechenden Behälter getrennt werden kann.

Der Dorn oder die Form kann mindestens zwei radial bewegbare Backen umfassen, wobei beispielsweise zwei radial bewegbare Backen vorgesehen sein können, die jeweils ein Zylindersegment von ca. 180° umfassen können oder wobei beispielsweise vier radial bewegbare Backen vorgesehen sein können, die jeweils ein Zylindersegment von ca. 90° umfassen können. Denkbar wären auch drei Backen ä ca. 120°. Um eine relative Beweglichkeit der Backen gewährleisten zu können, können sich diese (über ihre ganze Höhe) jeweils weniger (z.B. 0,05° bis 5°) als um 360°/(Anzahl der Backen) des Umfangs erstrecken.

In einer alternativen Ausführungsform können sich die Backen zumindest an ihren Rändern in Umfangsrichtung teilweise überlappen. Die Überlappung kann z.B. mittels mehrerer Vorsprünge entlang der Höhe reißverschlussartig ausgebildet sein. So können Vorsprünge einer Backe zwischen Vorsprünge der benachbarten Backe eingreifen. Dies kann dazu führen, dass sich mindestens eine, beispielsweise alle Backen in Umfangsrichtung, um mehr als 360°/(Anzahl der Backen) erstrecken. Beispielsweise könnten drei Backen vorgesehen sein, welche sich jeweils um 125° in Umfangsrichtung erstrecken.

Die radial bewegbaren Backen können zum Formen und Pressen des Verschlusses beispielsweise radial weg von einer Längsachse des Dorns bewegt werden.

Beim Ausführen einer Relativbewegung mittels der Bewegungsmittel zwischen der Form und dem Dorn zum Verkleinern des Abstands von der Form und dem Dorn können die bewegbaren Backen den Verschluss kontaktieren und können ihn gegen die Form drücken, sodass der Verschluss ausgeformt und gepresst werden kann.

Es kann vorkommen, dass durch die radiale Bewegung weg von der Längsachse der Form Anteile des Verschlusses nicht von einer der radial bewegbaren Backen kontaktiert werden kann. Die Form kann daher um einen Winkelbereich um die Längsachse des Dorns gedreht werden, wobei der Winkelbereich ungleich einer Winkelgröße eines Zylindersegments der Backe sein kann. Beispielsweise kann bei Winkelgrößen der Zylindersegmente von jeweils 90° eine Drehung um 45°, 135°, 225° oder 315° vorgesehen sein. Durch die Drehung des Dorns können Grate an der Mantelfläche des Verschlusses vermieden werden. Es kann stattdessen vorgesehen sein, dass nach einem ersten Form- und Pressvorgang die radial bewegbaren Backen zunächst radial von der Längsachse des Dorns wegbewegt werden können, bevor die Form um einen Winkelbereich um die Längsachse des Dorns gedreht werden kann, wobei der Winkelbereich ungleich einer Winkelgröße eines Zylindersegments der Backe sein kann.

Nach Ausführung der Drehung können erneut die radial bewegbaren Backen zum Formen und Pressen des Verschlusses beispielsweise radial zu einer Längsachse des Dorns bewegt werden, sodass beim Ausführen einer Relativbewegung mittels der Bewegungsmittel zwischen der Form und dem Dorn zum Verkleinern des Abstands von der Form und dem Dorn die bewegbaren Backen den Verschluss kontaktieren und ihn gegen den Dorn drücken können, sodass der Verschluss ausgeformt und gepresst werden kann.

Auch die Backen des Dorns können zwischen zwei Pressvorgängen entlang eines Winkelbereichs der Längsachse des Dorns, der nicht Winkelgrößen der Zylindersegmente entspricht, gedreht werden. Hierbei kann es zusätzlich auch eine Relativbewegung in Richtung der Längsachse des Dorns geben, die insbesondere dem Gewindeverlauf der Negativform der Struktur entsprechen kann.

Auf einer Rückseite der Mantelsegmentflächen kann jeweils mindestens eine schiefe Ebene vorgesehen sein und der Dorn oder die Form weiter eine parallel zur Längsachse des Dorns verfahrbare Spreizstange umfassen, wobei ein Zusammenwirken der mindestens einen schiefen Ebene und der Spreizstange eine radiale Bewegung der radial bewegbaren Backen bedingen kann. Die radial bewegbaren Backen können durch das Zusammenwirken der mindestens einen schiefen Ebene und der Spreizstange zum Formen und Pressen des Verschlusses beispielsweise radial weg von einer Längsachse des Dorns bewegt werden. Beim Ausführen einer Relativbewegung mittels der Bewegungsmittel zwischen der Form und dem Dorn zum Verkleinern des Abstands von der Form und dem Dorn können die bewegbaren Backen den Verschluss kontaktieren und können ihn gegen die Form drücken, sodass der Verschluss ausgeformt und gepresst werden kann. Wie zuvor beschrieben, kann auch eine Drehung des Dorns um seine Längsachse und/oder Relativbewegung entlang seiner Längsachse vorgesehen sein.

Der Dorn oder die Form kann eine Hydraulik umfassen, die im Zusammenwirken mit den radial bewegbaren Backen eine radiale Bewegung der radial bewegbaren Backen bedingen kann, um den Verschluss zu kontaktieren und gegen die Form oder den Dorn zu drücken.

Der Dorn oder die Form kann pro radial bewegbarer Backe mindestens einen Kniehebel umfassen, wobei ein Zusammenwirken des mindestens einen Kniehebels und der radial bewegbaren Backe eine radiale Bewegung der radial bewegbaren Backe bedingen kann. Die zuvor beschriebenen Zusammenwirkungen von Verschluss, Backen und Form können auch hier gelten. Es kann auch vorgesehen sein, dass, wie zuvor beschrieben, der Dorn oder die Form um die Längsachse des Dorns drehbar ausgebildet sein kann.

Die Vorrichtung kann weiter Drehmittel zum Ausführen einer Drehung des Dorns oder der Form um die Längsachse des Dorns umfassen.

Die Aufgabe wird zudem mit einem Verfahren nach Anspruch 11 gelöst.

Mit dem Verfahren kann der Fasern umfassende Verschluss mit hoher Genauigkeit und Stabilität geformt werden. Zudem kann die Restfeuchte des Verschlusses durch das Formen, insbesondere durch die Relativbewegung des Bewegungsmittels, verringert werden, sodass eine nachfolgende Trocknung nicht mehr oder nur noch verkürzt notwendig ist. So kann die Qualität der Verschlüsse und die Effizienz des Verfahrens verbessert werden.

Das Ausführen der Relativbewegung zum Verkleinern des Abstands kann umfassen:
- Bewegen der Form mittels der Bewegungsmittel radial in Richtung auf den Dorn zu, beispielsweise radial in Richtung auf eine Längsachse des Dorns zu, wobei der Dorn ortsfest ist oder
- Bewegen des Dorns mittels der Bewegungsmittel in Richtung auf die Form zu, beispielsweise radial weg von der Längsachse des Dorns, wobei die Form ortsfest ist oder
- Bewegen der Form mittels der Bewegungsmittel in Richtung auf den Dorn zu, beispielsweise radial in Richtung auf eine Längsachse des Dorns zu, und Bewegen des Dorns mittels der Bewegungsmittel in Richtung auf die Form zu, beispielsweise radial weg von der Längsachse des Dorns.

So kann der Verschluss zwischen Dorn und Form kontaktiert und geformt werden.

Zudem sind Merkmale, wie sie bereits hinsichtlich der Vorrichtung im Zusammenhang mit dem Ausführen der Relativbewegung zum Verkleinern des Abstands erwähnt wurden, auch für das Verfahren gültig, da für das Verfahren diese Vorrichtung verwendet werden kann.

Weiter kann das Verfahren ein Bewegen der radial bewegbaren Backen des Dorns weg von einer Längsachse des Dorns oder der radial bewegbaren Backen der Form hin zu einer Längsachse des Dorns umfassen. Dies gilt für eine Ausführungsform der Vorrichtung, in der der Dorn oder die Form mindestens zwei radial bewegbare Backen mit ebenen Mantelsegmentflächen umfassen kann, wie sie bereits weiter oben beschrieben wurden. Merkmale, wie sie bereits hinsichtlich des Dorns oder der Form mit radial bewegbaren Backen im Zusammenhang mit der Vorrichtung gemacht wurden, sind auch für das Verfahren gültig, da das Verfahren diese Vorrichtung verwendet.

Das Verfahren kann weiter ein Drehen des Dorns oder der Form um einen Winkelbereich umfassen. Beispielsweise kann vor dem Drehen ein Bewegen der radial bewegbaren Backen des Dorns oder der Form hin zu der Längsachse des Dorns vorgesehen sein. Nach dem Drehen kann dann ein Bewegen der radial bewegbaren Backen des Dorns weg von der Längsachse des Dorns vorgesehen sein.

Auch hier sind Merkmale, wie sie bereits im Zusammenhang mit der Vorrichtung gemacht wurden, für das Verfahren gültig.

Das Verfahren kann weiter, beispielsweise nach dem Formen und Pressen des Verschlusses, ein Bewegen der Form weg von der Längsachse des Dorns und/oder ein Bewegen der radial bewegbaren Backen des Dorns hin zu der Längsachse des Dorns umfassen, wenn der Dorn radial bewegbare Backen umfasst. Dadurch können die Form und/oder die radial bewegbaren Backen von dem geformten und gepressten Verschluss entfernt werden. Der Fasern, insbesondere Pulpe, umfassende Verschluss kann dann beispielsweise weiteren Verarbeitungsschritten zugeführt werden.

Der Dorn kann nach der Formung zum Transport und/oder Halten des Verschlusses ausgebildet sein. Somit kann der Verschluss beispielweise von anderen Handhabungseinrichtungen übernommen werden. Beim Halten oder Transportieren kann ein geringerer Druck von den Backen ausgeübt werden.

Beim Pressen kann möglichst viel des flüssigen Anteils der Pulpe aus dem Material herausgepresst werden, sodass der Verschluss nur noch eine geringe Restfeuchte aufweist.

Der Verschluss kann eine oder mehrere oder alle der folgenden Ausprägungen umfassen:
- ein Einrastelement, das am Verschluss angebracht ist und so ausgeführt ist, dass der Verschlussring eines Behälters einrasten kann,
- eine Negativform eines Gewindes zum Aufschrauben auf einen Behälter,
- ein Zeichen, z.B. in Form einer Zahl, zum Kennzeichnen der Form bzw. des Dorns, mit welchem der Verschluss gepresst wurde.

Die Struktur des Dorns weist bei der Ausformung eines Verschlusses insbesondere ein Außengewinde auf. Das Außengewinde kann ebenfalls an den beschriebenen Backen angeordnet sein. Die Stirnfläche des Dorns kann die Form der Innenseite der Stirnseite des Verschlusses bilden.

Die Außenform bei der Verschlussherstellung kann profiliert sein, so kann diese beispielsweise sich entlang der Höhenrichtung erstreckende Rillen oder Nuten aufweisen, um ein Aufdrehen des Verschlusses durch eine Person zu erleichtern. Die Höhenrichtung erstreckt sich parallel zu der Mittelachse, die durch das Gewinde des Verschlusses gebildet wird.

Insbesondere kann die Vorrichtung eine Vielzahl von gleichartigen Formen und Dornen aufweisen, um gleichzeitig eine Vielzahl von Verschlüssen herstellen zu können.

Weiterhin kann die Vorrichtung zusätzlich zu besagten Formen Anschwemmformen umfassen, in denen die Grundformen der zu formenden Verschlüsse (ohne so hohen Druck) gebildet werden, woraufhin die Grundformen durch eine Handhabungseinrichtung in die erfindungsgemäßen Formen transportiert werden. Alternativ können die zu formenden Verschlüsse in der erfindungsgemäßen Form aus einer ungeformte Fasern aufweisenden Masse gebildet werden.

Die Vorrichtung kann weiterhin einen Mischer aufweisen, mit dem die Masse (z.B. Pulpe) hergestellt wird. Die Vorrichtung kann eine Pumpe aufweisen, die die Masse zu der Form hin pumpen kann.

Die Form und/oder der Dorn können Löcher aufweisen, durch die herausgepresste Flüssigkeit abgeführt werden kann. Bei den Löchern kann es sich um Bohrungen handeln oder um Poren des Materials, aus dem die Form und/oder der Dorn zumindest teilweise bestehen. Weiterhin können Kanäle zum Abführen der Flüssigkeit innerhalb des Dorns und/oder der Form angeordnet sein.

Die Abfüllanlage kann überdies als Getränkeabfüllanlage ausgebildet sein. Zudem kann die Abfüllanlage eine zweite Transportvorrichtung zum Transportieren der Behälter umfassen.

Das Verfahren kann weiterhin einen oder mehrere der folgenden Schritte aufweisen:
- Formen und Pressen eines Behälters
- Transportieren des Behälters zu einer Abfülleinrichtung
- Abfüllen des Behälters
- Verschließen des Behälters mit dem Verschluss, insbesondere durch Aufschrauben
- Transportieren des Verschlusses zu einer Verschließvorrichtung (dritte Vorrichtung zum Aufbringen des Verschlusses)
- Beschichten von Verschluss und/oder Behälter vor dem Verschließen bzw. Beschichten des Behälters vor dem Abfüllen.

### Kurze Figurenbeschreibung

Die beigefügten Figuren stellen beispielhaft zum besseren Verständnis und zur Veranschaulichung Aspekte und/oder Ausführungsbeispiele der Erfindung dar. Es zeigt:
- Figur 1: einen schematischen Halblängsschnitt einer ersten Ausführungsform einer Vorrichtung zum Formen und Pressen eines Fasern umfassenden Verschlusses,
- Figur 2: einen schematischen Teillängsschnitt einer zweiten Ausführungsform einer Vorrichtung zum Formen und Pressen eines Fasern umfassenden Verschlusses,
- Figur 3A: eine schematische Draufsicht auf eine erste Anordnung von Form und Dorn zum Formen und Pressen eines Verschlusses,
- Figur 3B: eine schematische Draufsicht auf eine zweite Anordnung von Form und Dorn zum Formen und Pressen eines Verschlusses,
- Figur 3C: eine schematische Draufsicht auf eine dritte Anordnung von Form und Dorn zum Formen und Pressen eines Verschlusses,
- Figur 3D: eine schematische Draufsicht auf eine vierte Anordnung von Form und Dorn zum Formen und Pressen eines Verschlusses,
- Figur 4A: einen schematischen Halblängsschnitt einer zweiten Ausführungsform einer Vorrichtung zum Formen und Pressen eines Fasern umfassenden Verschlusses in einer ersten Anordnung,
- Figur 4B: einen schematischen Halblängsschnitt der zweiten Ausführungsform der Vorrichtung in einer zweiten Anordnung,
- Figur 4C: einen schematischen Halblängsschnitt der zweiten Ausführungsform der Vorrichtung in einer dritten Anordnung,
- Figur 5A: zeigt einen schematischen Halblängsschnitt der zweiten Ausführungsform der Vorrichtung mit einem ersten Ausführungsbeispiel der Materialeinbringung,
- Figur 5B: zeigt einen schematischen Halblängsschnitt der zweiten Ausführungsform der Vorrichtung mit einem zweiten Ausführungsbeispiel der Materialeinbringung, und
- Figur 5C: zeigt einen schematischen Halblängsschnitt der zweiten Ausführungsform der Vorrichtung mit einem ersten Beispiel der Materialeinbringung.
- Figur 6: zeigt eine Abfüllanlage in einer ersten Ausführungsform.

### Ausführliche Figurenbeschreibung

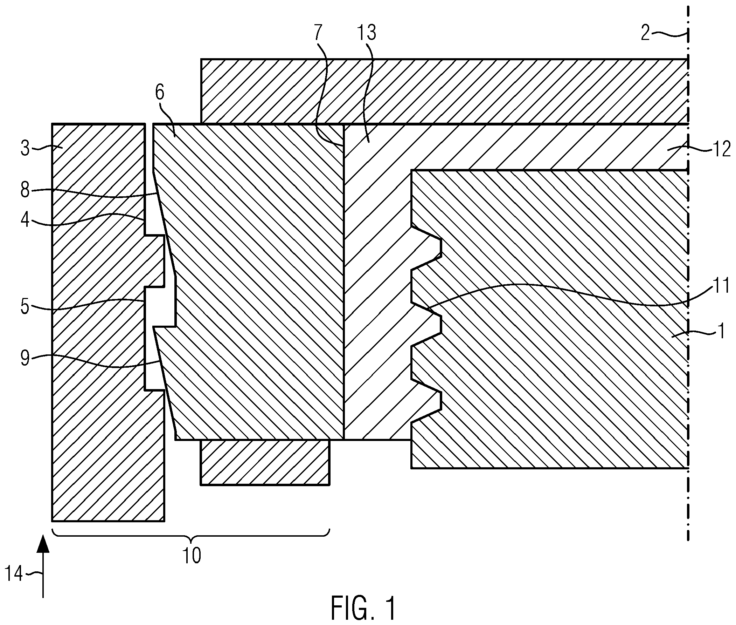

Die Figur 1 zeigt einen schematischen Halblängsschnitt einer ersten Ausführungsform einer Vorrichtung zum Formen und Pressen eines Fasern umfassenden Verschlusses 13.

In der Schnittdarstellung umfasst die Form 10 eine radial bewegbare Backe 6 mit einer Mantelsegmentfläche 7, auf deren Rückseite zwei, entlang der Längsachse 2 des Dorns 1 gesehen, übereinander angeordnete schiefe Ebenen 8, 9 vorgesehen sind. Die Form 10 umfasst in der Schnittdarstellung weiter eine parallel zur Längsachse 2 des Dorns 1 verfahrbare Spreizstange 3. Die Spreizstange 3 umfasst an ihrer Oberfläche, die zu der Backe 6 weist, zwei, entlang der Längsachse 2 des Dorns 1 gesehen, übereinander angeordnete Ausnehmungen 4, 5 auf. Bei einem Verfahren der Spreizstange 3 parallel zu der Längsachse 2 in eine Richtung 14 der Stirnseite 12 des Verschlusses 13 bedingt ein Zusammenwirken der schiefen Ebenen 8, 9 und der Ausnehmungen 4, 5 eine radiale Bewegung der radial bewegbaren Backe 6 in Richtung auf den Dorn 1 zu. Alternativ können die Ausnehmungen 4,5 ebenfalls schiefe Ebenen oder Wälzkörper zum Abfahren der schiefen Ebenen aufweisen (nicht gezeigt). In einer weiteren nicht gezeigten Alternative umfasst die Form 10 lediglich auf einer Höhe Wälzkörper, Ausnehmungen oder schiefe Ebenen. In Umfangsrichtung können zwei, drei oder mehr Wälzkörper, Ausnehmungen oder schiefe Ebenen angeordnet sein.

Der Dorn 1 und die Struktur 11 zum Formen des Verschlusses 13 befindet sich während des Pressvorgangs zumindest Teilweise innerhalb des Verschlusses 13. Durch die radiale Bewegung der Backe 6 in Richtung auf die Form 10 zu verkleinert sich der Abstand zwischen der Backe 6 und der Form 10 und kann der Verschluss 13 in die Struktur 11 der Form gepresst und Verschluss 13 vollständig ausgebildet bzw. fertiggestellt werden.

Oberhalb und unterhalb der Backe 6 sind nicht mit Positionskennzeichen versehene Führungen für die Backenbewegung zu sehen.

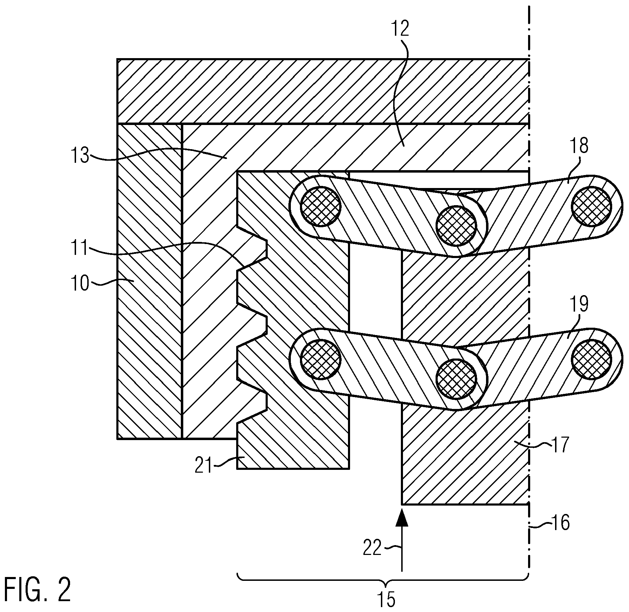

Die Figur 2 zeigt einen schematischen Teillängsschnitt einer zweiten Ausführungsform einer Vorrichtung zum Formen und Pressen eines Fasern umfassenden Verschlusses 13.

In der Schnittdarstellung umfasst der Dorn 15 eine radial bewegbare Backe 21 mit einer Struktur 11 und einer Stange 17, die mit zwei Kniehebeln 18, 19 mit der Backe 21 verbunden sind. Bei einem Verfahren der Stange 17 parallel zu der Längsachse 16 der Stange 17 in eine Richtung 22 zur Stirnseite 12 des Verschlusses 13 bedingt ein Zusammenwirken der Kniehebel 18, 19 mit der Backe 21 eine radiale Bewegung der radial bewegbaren Backe 21 in Richtung auf die Form 10 zu.

Durch die radiale Bewegung der Backe 21 in Richtung auf die Form 10 zu verkleinert sich der Abstand zwischen der Backe 21 und der Form 10 und der Verschluss 13 kann in die Struktur 11 des Dorns 1 gepresst werden und so kann der Verschluss 13 ausgebildet bzw. fertiggestellt werden.

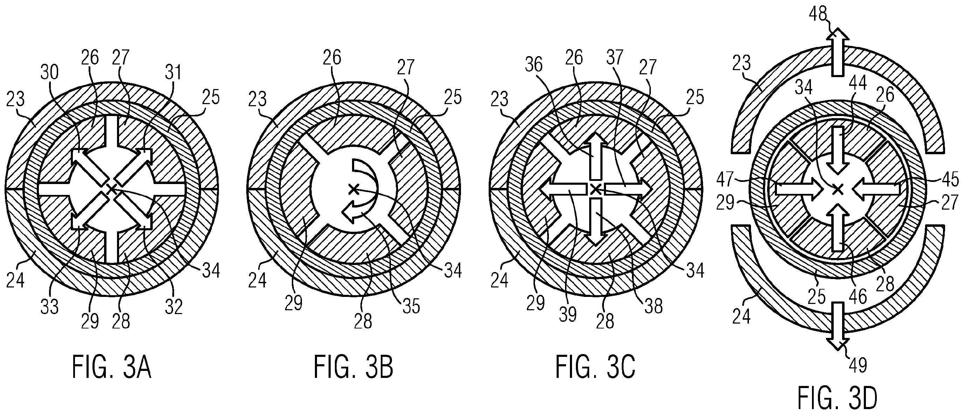

Die Figur 3A zeigt eine schematische Draufsicht auf eine erste Anordnung von Form und Dorn zum Formen und Pressen eines Verschlusses. Die Form umfasst zwei Teile 23, 24, die einen Fasern umfassenden Verschluss 25 umgeben. Vom Dorn sind die vier radial bewegbaren Backen 26, 27, 28, 29 der Übersichtlichkeit wegen nur exemplarisch dargestellt.

Eine radiale Bewegung der Backen 26-29 in die Richtungen 30-33 kann beispielsweise mittels den Elementen der in den Figuren 1 und 2 dargestellten Ausführungsformen durchgeführt werden, wobei der Mechanismus aus Figur 1 anstelle der Form auf den Dorn angewandt wird. In der Figur 3A werden die Backen 26-29 radial von einer Längsachse 34 des Dorns wegbewegt. Dadurch kann sich der Abstand zwischen der Form und den Backen 26-29 verkleinern, wodurch der Verschluss 25 durch Pressen der Form in eine Struktur (nicht dargestellt) geformt werden kann.

Durch die radiale Bewegung weg von der Längsachse 34 werden Anteile des Verschlusses 25 nicht von den vier Backen 26-29 kontaktiert. Der Dorn kann daher um einen Winkelbereich um seine Längsachse gedreht werden, wobei der Winkelbereich ungleich einer Winkelgröße eines Zylindersegments der Backen 26-29 sein kann. Durch die Drehung des Dorns können Grate im Inneren des Verschlusses 25 vermieden werden. Abhängig von der Form der Struktur der Mantelflächen der Backen 26-29 des Dorns, insbesondere bei Gewinden bzw. negativen Gewinden, kann zusätzlich zur Drehung um die Längsachse 34 des Dorns auch eine Relativbewegung in Richtung der Längsachse 34 des Dorns erfolgen.

Weiterhin könnte man, wenn ein Gewinde durch den sich drehenden Dorn aufgeprägt werden soll, den Dorn durch einen weiteren Dorn mit angepasster Struktur auf der Mantelfläche für den zweiten Pressvorgang ersetzen.

Die Figur 3B zeigt eine schematische Draufsicht auf eine zweite Anordnung von Form und Dorn zum Formen und Pressen eines Verschlusses 25. Die radiale Bewegung der Backen 26-29 von der Längsachse 34 weg wurde gestoppt und der Dorn wurde im Uhrzeigersinn 35 um 45° um die Längsachse 34 gedreht.

Allgemein gesagt kann sich eine Innen- und/oder Außenform 1, 23, 24, 26-29 zwischen zwei Pressvorgängen um einen Winkel relativ zum zu formenden Verschluss 25 drehen, wobei der Winkel derart bemessen ist, dass an der Position, welche zwischen zwei Formteilen beim ersten Pressvorgang angeordnet war, beim zweiten Pressvorgang ein Formteil anliegt.

Die Figur 3C zeigt eine schematische Draufsicht auf eine dritte Anordnung von Form und Dorn zum Formen und Pressen eines Verschlusses. Nach Beendigung der Drehung im Uhrzeigersinn 35 um 45° um die Längsachse 34 werden die Backen 26-29 erneut radial von der Längsachse 34 in die Richtungen 36-39 wegbewegt und der Verschluss 25 kann durch erneutes Pressen in die Struktur des Dorns geformt werden.

Die Position der beiden Teile 23, 24 der Form wird nicht verändert.

Die Figur 3D zeigt eine schematische Draufsicht auf eine vierte Anordnung von Form und Dorn zum Formen und Pressen eines Verschlusses. Nach dem Formen und Pressen des Verschlusses 25, also beispielsweise nach dessen Fertigstellung, kann der eine Teil 23 der Form in eine Richtung 48 radial weg von der Längsachse 34 und kann der andere Teil 24 der Form in eine Richtung 49 radial weg von der Längsachse 34 bewegt werden, um einen Abstand zu dem Verschluss 25 auszubilden. Zudem können die Backen 26-29 jeweils in eine Richtung 44, 45, 46, 47 radial auf die Längsachse 34 zubewegt werden, um ebenfalls einen Abstand zu dem Verschluss 25 auszubilden.

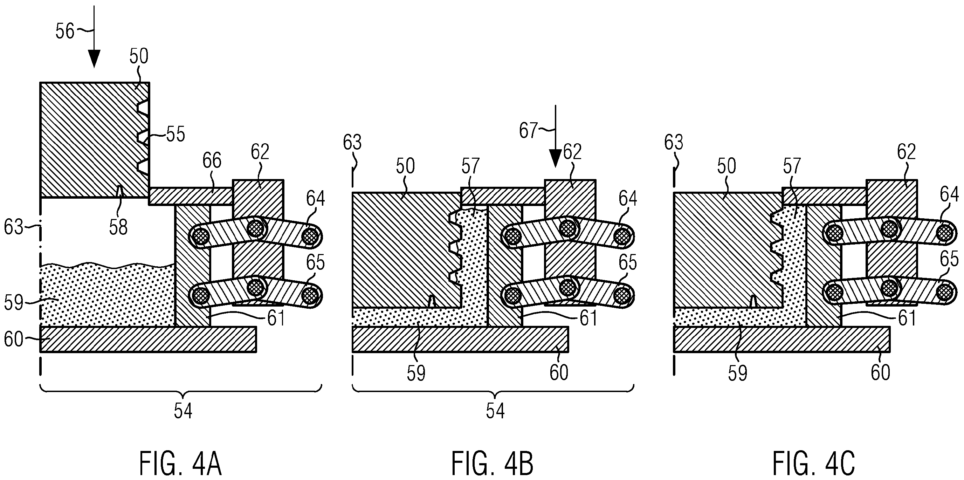

Die Figuren 4A bis C zeigen einen schematischen Halblängsschnitt einer zweiten Ausführungsform einer Vorrichtung zum Formen und Pressen der Fasern 59 zu einem Verschluss 57 in drei Anordnungen.

Figur 4A zeigt, dass sich in der ersten Anordnung der zweiten Ausführungsform bereits die Fasern 59 in der Form 54 befinden. Nun wird der Dorn 50 entlang der Richtung 56 bzw. der Längsachse des Dorns 63 in die Form 54 eingebracht, sodass die Fasern 59 zu einem Verschluss 57 umgeformt werden. Dabei befindet sich auf dem Dorn 50 eine Struktur 55 zum Formen einer Negativform eines auszubildenden Gewindes und/oder von auszubildenden Einrastelementen auf dem Verschluss und insbesondere eine Nut 58 zum Aufnehmen eines Dichtmaterials, das vor dem Pressvorgang bereits auf den Dorn aufgebracht werden kann oder in einem Zwischenschritt auf den Verschluss 57 aufgetragen werden kann.

Weiterhin umfasst die Form 54 eine Stirnseite 60, eine radial bewegliche Backe 61, eine Stange 62, ein seitliches Führungsstück 66 sowie in Richtung der Längsachse des Dorns 63 übereinander angeordnete Kniehebel 64 und 65.

Figur 4B zeigt in einer zweiten Anordnung der zweiten Ausführungsform, dass der Dorn 50 soweit in Richtung der Längsachse 63 des Dorns bewegt wurde, dass die Fasern 59 verdrängt wurden und sich der Verschluss 57 gebildet hat, wobei eine Stirnseite 59 des Verschlusses 57 verbleibt. Weiterhin ist zu sehen, dass die Fasern 59 noch nicht vollständig in die Struktur 55 des Dorns 50 eingebracht wurden. Nun wird die Stange 62 in Richtung 67, die parallel zur Richtung der Längsachse des Dorns 63 ist, bewegt, wodurch die Kniehebel 64 und 65 die bewegliche Backe 61 in Richtung des Dorns 50 drücken.

Figur 4C zeigt in einer dritten Anordnung der zweiten Ausführungsform, wie mithilfe der Bewegungen der Stange in Richtung 67 die Kniehebel 64 und 65 gedreht werden und die bewegliche Backe 61 in Richtung des Dorns 50 gedrückt wird, wodurch die Fasern des Verschlusses 57 nun vollständig in die Kontur der Struktur 55 gedrückt werden.

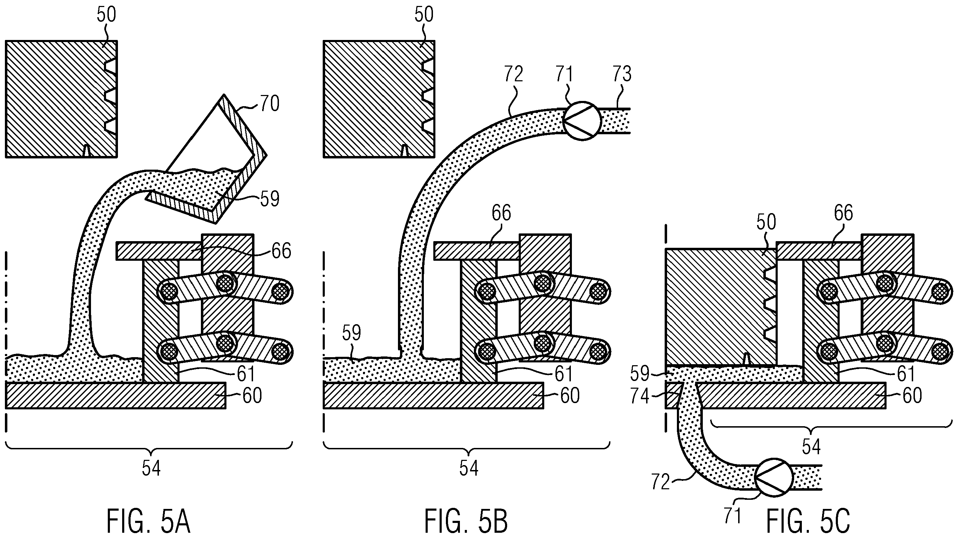

Die Figuren 5A bis C zeigen drei verschiedene Ausführungsformen der Materialeinbringung in die Vorrichtung gemäß der zweiten Ausführungsform. Die drei Ausführungsformen der Materialeinbringung sind aber auch mit der Vorrichtung gemäß der ersten Ausführungsform kombinierbar.

Figur 5A zeigt eine erste Ausführungsform der Materialeinbringung, in der die Fasern 59 mit einem Faserbehälter 70 in die Form 54 eingebracht werden. Der Faserbehälter 70 kann zuvor verwendet werden, um die Fasern 59 für den Pressvorgang vorzubereiten, insbesondere, um die Fasern 59 mit einer Flüssigkeit zu vermischen. Die Form 54 kann eine Stirnseite 60, eine radial bewegliche Backe 61 und ein Seitenteil 66 umfassen. Dabei kann der Dorn 50 aus der Form 54 herausgefahren sein, sodass die Fasern 59 mit dem Faserbehälter 70 in die Öffnung der Form 54, in die auch der Dorn 50 eingebracht wird, geschüttet werden können.

Figur 5B zeigt eine zweite Ausführungsform der Materialeinbringung, bei der die Fasern 59 mit einer Pumpe 71 in die Form eingebracht werden können. Hierbei können die Fasern 59 mit einem ersten Schlauchstück 72 von der Pumpe 71 durch die Öffnung der Form 54, durch die auch der Dorn 50 eingebracht wird, eingebracht werden. Überdies kann ein zweites Schlauchstück 73 zur Verbindung der Pumpe 71 mit einem Pulpemischer (nicht dargestellt) dienen. So können die Fasern 59 besonders zeiteffizient in die Form 54 eingebracht werden, wodurch der Fertigungsprozess effektiver gestaltet werden kann.

Figur 5C zeigt eine dritte Ausführungsform der Materialeinbringung, bei der die Fasern 59 mit einer Pumpe 71 durch ein Rückschlagventil 74 in die Form 54 gepumpt werden können. Hierbei kann die Pumpe 71 mit einem ersten Schlauchabschnitt 72 über das Rückschlagventil 74, welches sich in der Stirnseite 60 der Form 54 befinden kann, mit der Form 54 verbunden sein. Die Pumpe 71 kann so die Fasern 59 auch dann in die Form 54 drücken, wenn der Dorn 50 bereits in die Form 54 eingebracht wurde. Durch das Rückschlagventil 74 wird ein späteres Austreten der Fasern 59 durch einen Überdruck innerhalb der Form 54 verhindert. Weiterhin kann die Pumpe 71 mit einem Pulpemischer (nicht dargestellt) über einen zweiten Schlauchabschnitt 73 verbunden sein. Mit der Materialeinbringung nach dem dritten Ausführungsbeispiel kann die Fasereinbringung flexibel in den Pressprozess des Verschlusses integriert werden, da auch, nachdem der Dorn in Position gebracht wurde, noch Fasern 59 in die Form 54 eingebracht werden können.

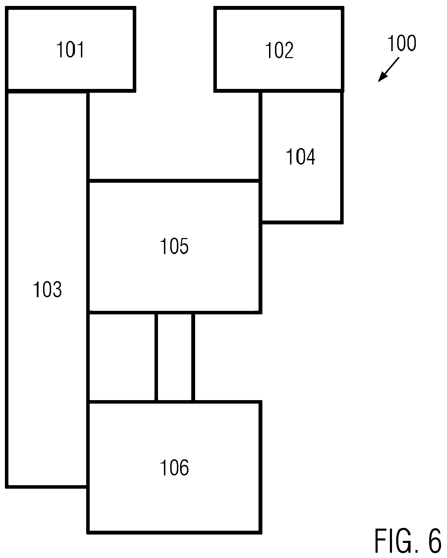

Figur 6 zeigt eine Abfüllanlage 100, insbesondere eine Getränkeabfüllanlage 10, mit einer ersten Vorrichtung 101 zum Formen und Pressen eines Verschlusses gemäß einem der obigen Ausführungsbeispiele. Weiter umfasst die Abfüllanlage 100 eine zweite Vorrichtung 102 zum Formen und Pressen eines Behälters, eine erste Transportvorrichtung 103 und eine Abfülleinrichtung 105 zum Befüllen der Behälter. Die Abfüllanlage 100 umfasst zudem eine dritte Vorrichtung 106 zum Aufbringen des Verschlusses 13, 57 auf den Behälter. Überdies kann die Abfüllanlage 100 eine zweite Transportvorrichtung zum Transport der Behälter von der zweiten Vorrichtung 102 zur Abfüllvorrichtung 105 umfassen. Die erste Transportvorrichtung 103 kann dazu ausgebildet sein die Verschlüsse 13 von der ersten Vorrichtung 101 zur dritten Vorrichtung 106 zu transportieren. Weiterhin kann die Abfüllanlage über eine weitere Transportvorrichtung zum Transportieren der abgefüllten Behälter zur dritten Vorrichtung 106 umfassen. Alternativ ist es aber auch möglich, die dritte Vorrichtung 106 unmittelbar an der Abfülleinrichtung 105 anzuordnen. Weiterhin ist es möglich, nicht gezeigte Beschichtungseinrichtungen entlang der ersten und zweiten Transportvorrichtung anzuordnen, um die Verschlüsse 113 bzw. Behälter zu beschichten, insbesondere deren jeweilige Innenseite. Die erste Vorrichtung 101 zum Formen und Pressen eines Verschlusses und die zweite Vorrichtung 102 zum Formen und Pressen eines Behälters können ihr jeweiliges Material von derselben Quelle beziehen, wenn sowohl Verschluss 113 als auch zugehörige Behälter aus demselben Material geformt und gepresst werden.

## Patentansprüche

1. Vorrichtung zum Formen und Pressen eines Fasern, insbesondere Pulpe, umfassenden Verschlusses (12, 52), wobei die Vorrichtung umfasst:
- eine Form (10, 54), in der der Verschluss zumindest teilweise auszubilden ist und welche eine Öffnung aufweist,
- einen Dorn (1, 15, 50), insbesondere zum Einbringen in die Öffnung, zumindest zeit- und/oder teilweise innerhalb der Form, wobei der Dorn eine Struktur (11, 55) zum Formen des Verschlusses (13, 25, 57) umfasst,
- Bewegungsmittel zum Ausführen einer Relativbewegung, wie etwa einer radialen Relativbewegung in Bezug auf eine Längsachse des Dorns (1, 15, 50), zwischen der Form (10, 54) und dem Dorn (1, 15, 50) zum Verkleinern eines Abstands von der Form (10, 54) und dem Dorn (1, 15, 50) und somit zum Formen und Pressen des Verschlusses (13, 25, 57).

2. Vorrichtung nach Anspruch 1, wobei die Struktur (11, 55) eine Negativform eines auszubildenden Gewindes und/oder von auszubildenden Einrastelementen umfasst.

3. Vorrichtung nach Anspruch 1 oder 2, wobei die Relativbewegung eine Bewegung der Form (10, 54) in Richtung auf den Dorn (1, 15, 50) zu oder in Richtung von dem Dorn (1, 15, 50) weg umfasst.

4. Vorrichtung nach einem der Ansprüche 1 bis 3, wobei die Relativbewegung eine Bewegung des Dorns (1, 15, 50) in Richtung auf die Form (10, 54) zu oder in Richtung von der Form (10, 54) weg umfasst.

5. Vorrichtung nach einem der Ansprüche 1 bis 4, wobei die Form (1, 15, 50) eine strukturierte Mantelfläche in Form von Erhebungen und/oder Vertiefungen, insbesondere Rillen, umfasst.

6. Vorrichtung nach einem der Ansprüche 1 bis 5, wobei der Dorn (1, 15) oder die Form mindestens zwei radial bewegbare Backen (6, 21, 26, 27, 28, 29) umfasst, wobei beispielsweise zwei radial bewegbare Backen vorgesehen sind, die jeweils ein Zylindersegment von 180° umfassen, oder wobei beispielsweise vier radial bewegbare Backen (26-29) vorgesehen sind, die jeweils ein Zylindersegment von 90° umfassen.

7. Vorrichtung nach Anspruch 6, wobei auf einer Rückseite der strukturierten Mantelsegmentflächen jeweils mindestens eine schiefe Ebene (8, 9) vorgesehen ist und der Dorn (1) oder die Form weiter eine (1) parallel zur Längsachse des Dorns (1) verfahrbare Spreizstange (3) oder Spreizhülse umfasst, wobei ein Zusammenwirken der mindestens einen schiefen Ebene (8, 9) und der Spreizstange (3) bzw. -hülse eine radiale Bewegung der radial bewegbaren Backen (6) bedingen kann.

8. Vorrichtung nach Anspruch 6, wobei der Dorn oder die Form (1, 15) eine Hydraulik umfasst, die im Zusammenwirken mit den radial bewegbaren Backen (6, 21, 26, 27, 28, 29) eine radiale Bewegung der radial bewegbaren Backen (6, 21, 26, 27, 28, 29) bedingen kann.

9. Vorrichtung nach Anspruch 6, wobei der Dorn (15) oder die Form für mindestens eine radial bewegbare Backe (21) mindestens einen Kniehebel (18, 19) umfasst, wobei ein Zusammenwirken des mindestens einen Kniehebels (18, 19) und der radial bewegbaren Backe (21) eine radiale Bewegung der radial bewegbaren Backe (21) bedingen kann.

10. Vorrichtung nach einem der Ansprüche 1 bis 9, weiter umfassend Drehmittel zum Ausführen einer Drehung des Dorns oder der Form um seine bzw. ihre Längsachse (34).

11. Verfahren zum Formen und Pressen eines Fasern, insbesondere Pulpe, umfassenden Verschlusses (12, 52), insbesondere unter Verwendung einer Vorrichtung nach einem der Ansprüche 1 bis 10, wobei das Verfahren umfasst:
- Bereitstellen eines Fasern, insbesondere Pulpe, umfassenden Verschlusses (12, 52) zumindest teilweise in einer Form (10, 54), der eine Öffnung umfasst, in welcher zumindest zeitweise und/oder teilweise ein Dorn (1, 15, 50) angeordnet ist,
- optional Einbringen des Dorns (1, 15, 50) in die Öffnung,
- Ausführen einer Relativbewegung, wie etwa einer radialen Relativbewegung in Bezug auf eine Längsachse des Dorns (1, 15, 50), zwischen Form (10, 54) und Dorn (1, 15, 50) mittels Bewegungsmitteln zum Verkleinern eines Abstands von Form (10, 54) und Dorn (1, 15, 50) und dadurch Formen und Pressen des Verschlusses.

12. Verfahren nach Anspruch 11, wobei das Ausführen der Relativbewegung zum Verkleinern des Abstands umfasst:
- Bewegen der Form (54) mittels der Bewegungsmittel radial in Richtung auf den Dorn (50) zu, beispielsweise radial in Richtung auf eine Längsachse (51) des Dorns (50) zu, wobei der Dorn (50) ortsfest ist oder
- Bewegen des Dorns (1, 15) mittels der Bewegungsmittel in Richtung auf die Form (10) zu, beispielsweise radial weg von der Längsachse (2, 16) des Dorns (1, 15), wobei die Form (10) ortsfest ist oder
- Bewegen der Form mittels der Bewegungsmittel in Richtung auf den Dorn zu, beispielsweise radial in Richtung auf eine Längsachse des Dorns zu, und Bewegen des Dorns mittels der Bewegungsmittel in Richtung auf die Form zu, beispielsweise radial weg von der Längsachse des Dorns.

13. Verfahren nach Anspruch 11 oder 12, weiter umfassend Bewegen radial bewegbarer Backen (6, 21, 26-29) des Dorns (1, 15) weg von einer Längsachse (2, 16, 34) des Dorns (1, 15) oder Bewegen radial bewegbarer Backen (6, 21, 26-29) der Form hin zu einer Längsachse (2, 16, 34) des Dorns (1, 15).

14. Verfahren nach Anspruch 13, weiter umfassend Drehen des Dorns oder der Form um einen Winkel.

15. Verfahren nach einem der Ansprüche 11 bis 14, weiter umfassend, beispielsweise nach dem Formen und Pressen des Verschlusses, Bewegen der Form weg von der Längsachse (34) des Dorns und/oder Bewegen der radial bewegbaren Backen (26-29) des Dorns hin zu der Längsachse (34) des Dorns, wenn der Dorn radial bewegbare Backen (26-29) umfasst.

16. Abfüllanlage (100), umfassend:
eine erste Vorrichtung (101) zum Formen und Pressen eines Fasern umfassenden Verschlusses (13, 57), insbesondere nach Anspruch 1,
eine zweite Vorrichtung (102) zum Formen und Pressen eines Fasern umfassenden Behälters,
eine erste Transportvorrichtung (103) zum Transportieren des Verschlusses (13),
eine Abfülleinrichtung (105) zum Befüllen des Behälters mit einer Flüssigkeit, und
eine dritte Vorrichtung (106) zum Aufbringen des Verschlusses (13, 57) auf den Behälter.
